# EUROPÄISCHE PATENTANMELDUNG

(11) **EP 0 670 242 A1**
(43) Veröffentlichungstag der Anmeldung: **06.09.1995**
(21) Anmeldenummer: 95102692.1
(22) Anmeldetag: 24.02.1995
(51) Int. Cl.: B60P 7/08

(54) **Zurrpunkt**

(30) Priorität: 03.03.1994 DE 9403619 U
(71) Anmelder: KARL HILDEBRAND GmbH, D-40699 Erkrath (DE)
(72) Erfinder: Van Hall, Hein, D-42553 Velbert (DE); Kockel, Wolfgang, D-40699 Erkrath (DE); Woitke, Volker, D-42549 Velbert (DE)
(74) Vertreter: Heim, Hans-Karl, Dipl.-Ing.

(57) **Zusammenfassung**

Die Erfindung betrifft einen Zurrpunkt, insbesondere zur Ladungssicherung von Gütern auf Nutzfahrzeugen, welcher im Bereich einer Ladefläche befestigt ist und zur lösbaren Verbindung mit einem Zurrmittel ausgebildet ist.

Um eine besonders einfache und kostengünstige Bauart, eine den vorgeschriebenen technischen Anforderungen entsprechende Ladungssicherung und eine außerordentlich einfache Betätigung zu erreichen, wird gemäß der Erfindung als Zurrpunkt ein Zurrschloß (3) angeordnet, welches in Ruhestellung oder in Verschlußstellung eine Öffnung im Bereich einer Ladeoberfläche (4) abschließt. In Betriebs-oder Arbeitsstellung steht es mit einem Zurrelement über die Ladeoberfläche hinaus, wobei das Zurrelement in einer Führungseinrichtung (17) gehalten und neigungsverstellbar ist.

## Beschreibung

Die Erfindung betrifft einen Zurrpunkt gemäß Oberbegriff des Anspruch 1.

Um eine verkehrs- und betriebssichere Beförderung von Gütern auf Straßenfahrzeugen zu gewährleisten, sind Sicherungseinrichtungen vorgeschrieben. Derartige Sicherungseinrichtungen, die eine Schädigung, Belästigung und Gefährdung von Personen und Gütern verhindern sollen, sind Zurrmittel, beispielsweise spannbare Gurte, Ketten und Seile, die in Verankerungen gehalten werden. Als Verankerungen können sogenannte Zurrpunkte im Bodenrahmen der Ladefläche oder im Bereich der Bordwände angebracht sein, beispielsweise Ovalglieder, Haken, Ösen oder Zurrschienen, die als Befestigungsteile zur Verbindung der Zurrmittel dienen.

Wenn Lastkraftwagen, Anhänger und Sattelanhänger mit Pritschenaufbauten mit Zurrpunkten ausgestattet sind, die den vorgeschriebenen Anforderungen, beispielsweise bezüglich Anzahl, Mindestabstand, Festigkeit, Anordnung, Bauart, Neigungswinkel usw., in Abhängigkeit von dem zulässigen Gesamtgewicht des Fahrzeuges, der Ladeflächengröße, der aufzunehmenden Zurrkraft usw. genügen, kann dies auf einem Hinweisschild am Fahrzeug kenntlich gemacht werden.

Im Hinblick auf die Bauart sollte ein Zurrpunkt die bei der Ladungssicherung aufzunehmenden Kräfte in die tragenden Teile des Fahrzeugs einleiten. Weiterhin dürfen die Zurrpunkte in Ruhestellung nicht über die Horizontalebene der Ladefläche nach oben überstehen, und Vertiefungen in der Ladefläche sollten so klein wie möglich sein.

Der Erfindung liegt die Aufgabe zugrunde, einen Zurrpunkt zu schaffen, welcher bei einer besonders einfachen und kostengünstigen Bauart den vorgeschriebenen technischen Anforderungen einer Ladungssicherung auf Nutzfahrzeugen in besonderem Maße entspricht und darüber hinaus eine außerordentlich einfache Betätigung erlaubt.

Erfindungsgemäß wird die Aufgabe durch die kennzeichnenden Merkmale des Anspruchs 1 gelöst. Zweckmäßige und vorteilhafte Ausgestaltungen sind in der Figurenbeschreibung und in den Unteransprüchen beschrieben.

Die Erfindung basiert auf dem Grundgedanken, als Zurrpunkt ein Zurrschloß anzuordnen, welches in Ruhestellung bzw. in Verschlußstellung eine Öffnung im Bereich einer Ladeoberfläche abschließt und welches in Betriebs- oder Arbeitsstellung mit einem Zurrelement über die Ladeoberfläche übersteht. In aller Regel handelt es sich bei dem Ladeflächenbereich um einen Bereich eines Bodenrahmens für die Ladefläche.

Das Zurrelement ist zur lösbaren Verbindung mit einem Zurrmittel ausgebildet und beispielsweise zur form- und kraftschlüssigen Aufnahme eines Hakens oder einer Öse, eines Gurtes oder Seiles als Zurrmittel mit einem komplementär ausgebildeten Verbindungsbereich versehen.

Das Zurrelement, welches beispielsweise als Zurröse, Zurrring oder als ein Haken ausgebildet sein kann, ist neigungsverstellbar in einer Führungseinrichtung gehalten.

Es ist vorteilhaft, daß das Zurrelement in Betriebsstellung je nach Angriffsrichtung eines Zurrmittels unter Bildung eines Neigungswinkels bis 90 nach beiden Seiten einer Lagerachse neigungsverstellbar ist. In Ruhestellung ist das Zurrelement in einem Gehäuse, welches unterhalb der Ladeoberfläche bzw. der Bodenrahmenoberfläche angeordnet ist, aufgenommen. Damit ist gewährleistet, daß der erfindungsgemäße Zurrpunkt in Ruhelage nicht über die Oberfläche hinausragt. Um einen spritzwasserdichten Laderaum oder Ladefläche zu gewährleisten, weist das Zurrelement eine komplementär zu einer Durchtrittsöffnung im Bereich der Ladefläche ausgebildete Oberfläche auf.

Um zu gewährleisten, daß die bei der Ladungssicherung von Gütern auftretenden Zurrkräfte in tragende Teile eines Fahrzeuges eingeleitet werden, ist eine Befestigung des mehrteilig ausgebildeten Zurrschlosses in einem Bodenrahmen der Ladefläche vorgesehen. Der Bodenrahmen ist bevorzugt als Hohlprofil ausgebildet und weist zweckmäßigerweise eine Einbauöffnung auf, durch welche das Zurrschloß mit Gehäuse, Führungseinrichtung und Zurrelement eingeführt und nach Ausrichtung, insbesondere oberflächenbündig befestigt werden kann.

Es ist zweckmäßig, das Gehäuse des Zurrschlosses im Querschnitt nahezu U-förmig auszubilden und die Befestigung in dem Bodenrahmenprofil an einer rückseitigen, vertikalen Gehäusewand vorzunehmen. Beispielsweise kann ein Gehäuse in einem Aluminium-Bodenrahmen angeschraubt werden, während die Befestigung in einem Stahl-Bodenrahmen durch Verschweißen erfolgen kann.

In dem U-förmigen Gehäuse des Zurrschlosses ist als eine Führungseinrichtung ein Querbolzen mit Lagerelementen für das Zurrelement angeordnet, welche aus einer Verschlußstellung in eine Betriebsstellung, insbesondere in vertikaler Richtung verstellbar ist.

An einer Unterseite des Querbolzens greift, zweckmäßigerweise außermittig, eine Druckkraft an. In einer besonders einfachen und wirkungsvollen Ausbildung ist wenigstens eine Druckfeder in einem Gehäuseboden angeordnet, deren Federkraft derart bemessen ist, daß das Zurrelement in entriegelter Stellung über die Ladefläche übersteht, so daß es aus dem Gehäuse bis in eine Betriebsstellung herausgezogen werden kann.

Damit auch in Betriebsstellung eine Spritzwasserdichtheit des Zurrschlosses gewährleistet ist, deckt das Zurrelement mit Lagerachse und beidseitig angeordneten Lagerelementen der Führungseinrichtung die Durchtrittsöffnung des Bodenrahmenprofils sowie die komplementär ausgebildete Öffnung des U-förmigen Gehäuses nahezu vollständig ab.

Zweckmäßigerweise erfolgt eine Führung des Zurrelementes über den Querbolzen und gegebenenfalls zusätzlich über die an beiden Stirnseiten des Zurrelementes angeordneten, vertikal ausgerichteten Lagerelemente, die in rinnenförmigen Ausnehmungen des U-förmigen Gehäuses geführt sind.

Eine Sperr- oder Riegeleinrichtung ist bevorzugt an einer längeren Stirnseite des Zurrelementes angeordnet. In einer besonders zweckmäßigen Ausbildung ist eine Sperrnase an einer längeren Stirnseite und beabstandet zur Oberfläche des Zurrelementes vorgesehen, die im Zusammenwirken mit der außermittig angeordneten bodenseitigen Druckfeder bei einer leichten Schrägstellung des Zurrelementes unter den Bodenrahmen im Bereich der Durchtrittsöffnung geschoben und festgeklemmt werden kann. Die Betätigung ist besonders einfach, indem Druck auf die Oberfläche des Zurrelementes in einem der Druckfeder gegenüberliegenden Bereich ausgeübt wird. Dadurch wird eine vertikale Ausrichtung des Zurrelementes erreicht und die Sperrnase liegt frei und befindet sich außer Eingriff in Bezug auf den Bodenrahmen. In dieser Stellung wirkt die Druckkraft der bodenseitigen Feder auf die Führungseinrichtung und das mit der Führungseinrichtung verbundene Zurrelement, welches aus einer Verschlußstellung gedrückt und je nach Federkraft bis in die Betriebsstellung verstellt wird. Bei einer geringeren Druckfederkraft kann das Zurrelement, welches vorteilhafterweise mit einem sich konisch erweiternden und leicht abgeschrägten bzw. geneigten Kopfbereich ausgebildet ist, nach der Entriegelung und einem leichten Überstand aus dem Gehäuse bis zur Blockierstellung herausgezogen werden. Die Abschrägung der Oberfläche ermöglicht in Verschlußstellung eine oberflächenbündige, nahezu verschlossene Ladefläche im Bereich der Durchtrittsöffnung.

Als Zurrelement ist zweckmäßigerweise ein Schmiedeteil eingesetzt. In einer bevorzugten Ausbildung ist das Zurrelement als Zurring oder Zurröse mit einer zentralen, insbesonderen kreisförmigen Öffnung ausgebildet, in welche ein Zurrmittel, beispielsweise ein Gurt, Seil oder eine Kette, mit einem hakenförmigen Verbindungselement lösbar befestigt werden kann.

In einer alternativen Ausbildung kann ein Zurrelement auch hakenartig geformt sein, wobei das gesamte Zurrelement oder nur ein hakenartiges Teil in Betriebs- oder Öffnungsstellung neigungsverstellbar entsprechend der Richtung der Angriffskraft des Zurrmittels ausgebildet sein kann.

Das erfindungsgemäße Zurrschloß ist aufgrund der mehrteiligen, verstellbaren Konstruktion im zusammengebauten Zustand im Bereich der Ladefläche, insbesondere in einem Bodenrahmenprofil zu befestigen. Die Handhabung des montierten Zurrschlosses ist einfach und ohne Hilfsmittel möglich, wobei aufgrund der konstruktiven Ausbildung die standardisierten technischen Anforderungen an einen Zurrpunkt, insbesondere eine versenkte, spritzwasserdichte und zollsichere Anordnung und die Aufnahme der erforderlichen Zurrkräfte etc. eingehalten werden.

Die Erfindung wird nachstehend anhand einer Zeichnung weiter beschrieben; in dieser zeigen in einer stark schematisierten Darstellung
Fig. 1 eine teilgeschnittene Ansicht eines erfindungsgemäßen Zurrpunktes in Betriebsstellung;
Fig. 2 einen Schnitt nach Linie 11-11 gemäß Fig. 1;
Fig. 3 eine Ansicht eines erfindungsgemäßen Zurrpunktes in Verschlußstellung;
Fig. 4 einen Schnitt nach Linie IV-IV gemäß Fig. 3 und
Fig. 5 eine Seitenansicht eines erfindungsgemäßen Zurrpunktes in Einbaustellung.

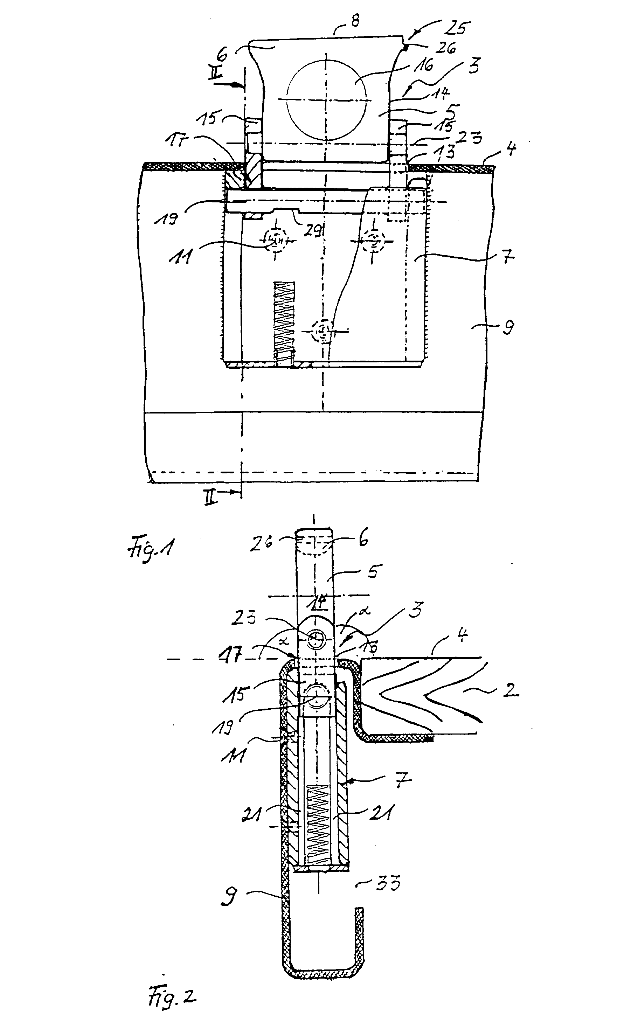

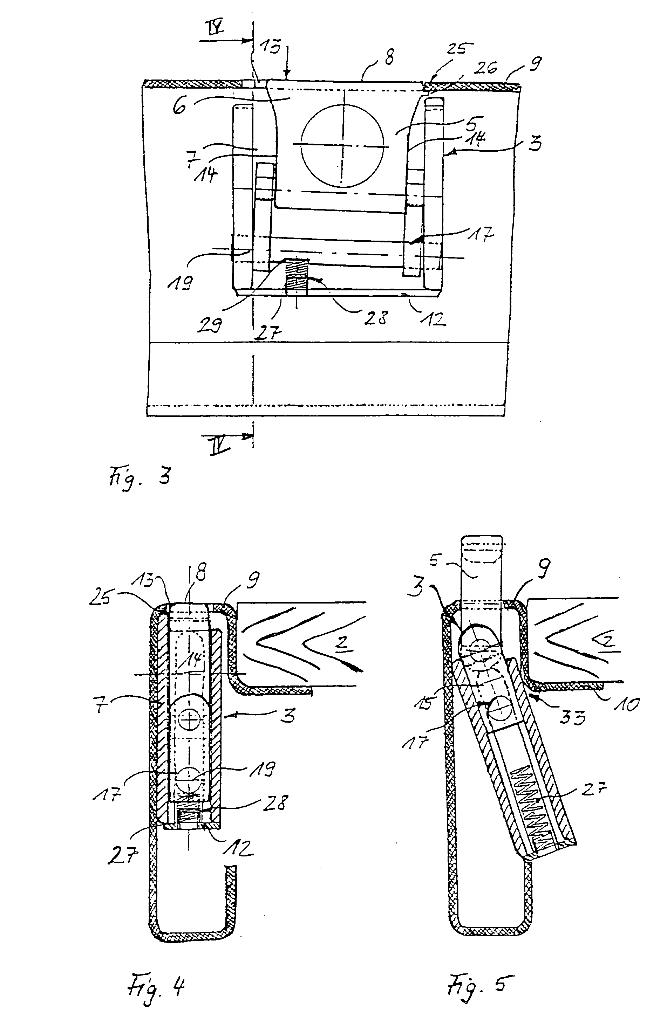

In Fig. 1 und Fig. 2 ist als ein Zurrpunkt zur Ladungssicherung von Gütern im Bereich einer Ladefläche 2 eine vorteilhafte Ausbildung eines Zurrschlosses 3 in Betriebsstellung dargestellt.

Das Zurrschloß 3 ist mehrteilig ausgebildet und weist ein Gehäuse 7 auf, in welchem ein Zurrelement 5 über eine Führungseinrichtung 17 verstellbar angeordnet ist. In Betriebsstellung des Zurrschlosses 3 gemäß Fig. 1 und 2 ragt das Zurrelement 5 über die Ladefläche 2 hinaus und ist um eine horizontale Lagerachse 23 verschwenkbar.

Das Gehäuse 7 ist nahezu U-förmig ausgebildet und in einem Bodenrahmen 9 mittels Schraubverbindungen 11 befestigt. Der Bodenrahmen 9 ist ein Hohlprofil mit etwa C-förmigem Querschnitt, welches im Bereich einer Ladeoberfläche 4 eine Durchtrittsöffnung 13 für das Zurrelement 5 und für stirnseitig angeordnete Lagerelemente 15 der Führungseinrichtung 17 aufweist.

Die Führungseinrichtung 17 ist mit einem Querbolzen 19, welcher nahezu über die gesamte Breite des Gehäuses 7 reicht und endseitig mit den Lagerelementen 15 für das Zurrelement 5 verbunden ist, in dem U-förmigen Gehäuse 7 vertikal verstellbar angeordnet.

Wie insbesondere aus Fig. 2 hervorgeht, ist eine Führung nicht nur durch den Querbolzen 19, sondern auch durch rinnenförmige Ausnehmungen 21 gewährleistet. Die rinnenförmigen Ausnehmungen 21 sind an Innenflächen des Gehäuses 7 ausgebildet und dienen der Führung der vertikal ausgerichteten Lagerelemente 15.

In einem definierten Abstand und oberhalb des Querbolzens 19 der Führungseinrichtung 17 ist das Zurrelement 5 um eine parallel zum Querbolzen 19 angeordnete Lagerachse 23 verschwenkbar, so daß ein mit dem Zurrelement 5 verbundenes Zurrmittel (nicht dargestellt) entsprechend der Richtung der Zurrkraft zu einer Neigungsverstellung des Zurrelementes führt. Das Zurrschloß 3 gewährleistet durch seine konstruktive Gestaltung einen Neigungswinkel bis etwa 90 Grad in beiden Richtungen.

Da das Zurrelement 5 in diesem Ausführungsbeispiel mit einer zentralen kreisförmigen Öffnung 16 und als eine Zurröse oder auch als ein Zurring ausgebildet ist, kann ein Zurrmittel mit einem hakenförmigen End- bzw. Verbindungselement zur Verbindung zweier Zurrpunkte zwecks Ladungssicherung von Gütern eingesetzt werden.

In der in den Figuren 1 und 2 dargestellten Betriebsstellung werden das Zurrelement 5 und die Führungseinrichtung 17 aus einer in den Figuren 3 und 4 dargestellten Verschluß- oder Ruhestellung vertikal verschoben, nachdem eine mit dem Zurrelement 5 zusammenwirkende Sperr- oder Riegeleinrichtung 25 gelöst ist und das Zurrelement 5 mit Führungseinrichtung 17 nicht mehr zurückgehalten wird.

Eine derartige Sperr- und Riegeleinrichtung 25 kann eine Sperrnase 26 sein, welche in einem stirnseitigen Kopfbereich 6 des Zurrelementes ausgebildet ist. In Verschlußstellung gemäß Figuren 3 und 4 wird die Sperrnase 26 im Bereich einer Durchtrittsöffnung 13 unter den Bodenrahmen 9 gehalten und gesichert.

In den Figuren 3 bis 5 sind für gleiche Merkmale identische Bezugszeichen verwendet.

Fig. 3 zeigt ein Zurrschloß 3 in Verschlußstellung, bei dem eine Sperrnase 25 eines leicht schräg gestellten Zurrelementes 5 im Bodenrahmen 9 gehalten ist. Die Schrägstellung des Zurrelementes 3 zur Realisierung einer Sperr- oder Verriegelungsstellung wird durch eine außermittige Anordnung einer an der Führungseinrichtung 17 angreifenden Gegenkraft oder Druckkraft 28 erreicht. Als Gegenkraft 28 ist in diesem Ausführungsbeispiel eine Druckfeder 27 in einem Gehäuseboden 12 angeordnet, die in Verschlußstellung zusammengedrückt ist. Sobald die Sperr- oder Verriegelungsstellung des Zurrelementes 5 aufgehoben ist, was in einer besonders einfachen Handhabung durch einen leichten Druck auf einen der Druckfeder 27 etwa gegenüberliegenden Bereich der Oberfläche 8 des Zurrelementes 5 erreicht wird, gelangt die Sperrnase 26 außer Eingriff. Das Zurrelement 5, welches in Verschlußstellung auf Grund einer geneigten oder abgeschrägten Oberfläche 8 fluchtend zur Ladeoberfläche 4 verläuft, wird über den Querbolzen 19 der Führungseinrichtung 17 aus dem Gehäuse 7 und aus der Ladefläche 2 gedrückt. Von Hand kann das Zurrelement 5 bis zur Betriebsstellung gemäß Fig. 1 und und 2 herausgezogen werden.

Abwandlungen der Sperr- und Riegeleinrichtungen sind möglich, indem beispielsweise ein schieberähnliches Element im Bodenrahmen horizontal verschiebbar angeordnet ist, welches mit einer komplementären Ausnehmung im Zurrelement zusammenwirkt.

Figuren 3 und 4 verdeutlichen eine oberflächenbündige, spritzwasserdichte und zollsichere Anordnung eines Zurrelementes 5 in der Durchtrittsöffnung 13 des Bodenrahmens 9, wobei eine nahezu verschlossene Durchtrittsöffnung 13 durch einen sich konisch verbreiternden Kopfbereich 6 erreicht wird. Vorteilhafterweise dient der breitere Kopfbereich 6 beim Herausziehen des Zurrelementes 5 als Griffbereich.

Die Druckfeder 27 ist in Verschlußstellung in einer nahezu formschlüssigen Ausnehmung 29 des Querbolzens 19 gehalten.

Fig. 5 zeigt eine Einbaustellung eines Zurrschlosses 3 in einem etwa C-förmigen Bodenrahmen 9, welcher unterhalb eines Befestigungsflansches 10 zur Aufnahme einer Ladefläche 2 eine Einbauöffnung 33 aufweist. Infolge der schwenkbaren Anordnung des Zurrelementes 5 in den Lagerelementen 15 der Führungseinrichtung 17 ist ein besonders schneller und unkomplizierter Einbau des Zurrschlosses 3 in einen Bodenrahmen 9 möglich.

## Patentansprüche

1. Zurrpunkt, insbesondere zur Ladungssicherung von Gütern auf Nutzfahrzeugen, welcher im Bereich einer Ladefläche befestigt ist und zur lösbaren Verbindung mit einem Zurrmittel ausgebildet ist,
dadurch gekennzeichnet,
daß ein Zurrschloß (3) als Zurrpunkt vorgesehen ist,
daß das Zurrschloß (3) ein Gehäuse (7) zur Befestigung und ein Zurrelement (5) zur lösbaren Verbindung mit einem Zurrmittel aufweist, daß das Gehäuse (7) unterhalb einer Ladeoberfläche (4) angeordnet und zur Aufnahme und Führung des Zurrelementes (5) ausgebildet ist,
daß das Zurrelement (5), welches in einer Verschlußstellung von dem Gehäuse (7) aufgenommen ist, eine Durchtrittsöffnung (13) im Bereich der Ladefläche (2) verschließt und in einer Betriebsstellung zur Verbindung mit einem Zurrmittel über die Ladeoberfläche (4) übersteht und in Angriffsrichtung des Zurrmittels neigungsverstellbar ist.

2. Zurrpunkt nach Anspruch 1,
dadurch gekennzeichnet,
daß das Gehäuse (7) in einem Bodenrahmen (9) im Bereich der Ladefläche (2) befestigt ist und daß das Zurrelement (5) über eine Führungseinrichtung (17) in dem Gehäuse (7) vertikal verstellbar angeordnet und in Betriebsstellung um eine horizontale Lagerachse (23) neigungsverstellbar ist.

3. Zurrpunkt nach Anspruch 1 oder 2,
dadurch gekennzeichnet,
daß das Zurrelement (5) mit einer Oberfläche (8) in Verschlußstellung nahezu fluchtend mit der Ladeoberfläche (4) in dem Gehäuse (7) aufgenommen ist und daß eine Sperr- oder Riegeleinrichtung (25) zur Sicherung der Verschlußstellung vorgesehen ist.

4. Zurrpunkt nach Anspruch 3,
dadurch gekennzeichnet,
daß der Sperr- oder Riegeleinrichtung (25) eine Druckkraft (28) entgegengerichtet ist, welche das Zurrelement (5) nach Entriegelung über die Führungseinrichtung (17) in Richtung Betriebsstellung verschiebt.

5. Zurrpunkt nach einem der Ansprüche 2 bis 4, dadurch gekennzeichnet,
daß das Gehäuse (7) im Querschnitt nahezu U-förmig ausgebildet ist und daß die Führungseinrichtung (17) mit einem Querbolzen (19) und mit etwa vertikalen Lagerelementen (15) für das Zurrelement (5) durch eine Druckfeder (27), welche in einem Gehäuseboden, insbesondere außermittig angeordnet ist und in eine bodenseitige Ausnehmung (29) des Querbolzens (19) eingreift, aus der Verschlußstellung in Richtung Betriebsstellung verschiebbar und in einer oberen Endstellung im Gehäuse (7) gehalten ist.

6. Zurrpunkt nach Anspruch 5,
dadurch gekennzeichnet,
daß der Querbolzen (19) in den vertikalen Lagerelementen (15) befestigt ist und daß die vertikalen Lagerelemente (15), die an Stirnseiten (14) eines etwa quaderförmig ausgebildeten Zurrelementes (5) zur Aufnahme der Lagerachse (23) des Zurrelementes (5) angeordnet sind, in rinnenförmigen Ausnehmungen (21) an Innenflächen des Gehäuses (7) geführt sind.

7. Zurrpunkt nach einem der vorhergehenden Ansprüche 2 bis 6,
dadurch gekennzeichnet, daß das Zurrelement (5), welches als Zurröse oder Zurring ausgebildet ist und eine zentrale kreisförmige Öffnung (16) zum Eingriff eines Zurrmittels oder eines Verbindungselementes eines Zurrmittels aufweist, in Betriebsstellung bis zu einem Neigungswinkel von etwa 90 Grad um die Lagerachse (23) verstellbar ist.

8. Zurrpunkt nach einem der vorhergehenden Ansprüche 3 bis 7,
dadurch gekennzeichnet,
daß als Sperr- oder Riegeleinrichtung (25) eine Sperrnase (26) ausgebildet ist, welche insbesondere im Bereich einer Stirnseite des Zurrelementes (5) angeordnet und bei einer leichten Schrägstellung des Zurrelementes (5) im Bereich der Durchtrittsöffnung (13) unter dem Bodenrahmen (9) gehalten ist, und daß das Zurrelement (5) durch Druckeinwirkung auf einen der Druckfeder (27) etwa gegenüberliegenden Bereich der Oberfläche (8) aus einer Sperr- und Verschlußstellung in eine Betriebs-oder Arbeitsstellung verschiebbar und/oder herausziehbar ist.

9. Zurrpunkt nach einem der vorhergehenden Ansprüche,
dadurch gekennzeichnet,
daß das Zurrschloß (3) spritzwasserdicht und zollsicher ausgebildet ist und daß als Zurrelement (5) insbesondere ein geschmiedetes Bauteil eingesetzt ist.

10. Zurrpunkt nach einem der vorhergehenden Ansprüche 2 bis 9,
dadurch gekennzeichnet,
daß der Bodenrahmen (9) ein Hohlprofil ist und eine Einbauöffnung (33) für das Zurrschloß (3) sowie eine Durchtrittsöffnung (13) im Bereich eines oberen horizontalen Profilschenkels aufweist und daß das Gehäuse (7) des Zurrschlosses (3) an einem Aluminium-Bodenrahmen (8) durch Schraubverbindungen (11) befestigt ist oder an einem Stahl-Bodenrahmen (8) angeschweißt ist.
